# EUROPÄISCHE PATENTSCHRIFT

(11) **EP 1 432 968 B1**
(45) Veröffentlichungstag und Bekanntmachung des Hinweises auf die Patenterteilung: **25.05.2005**
(21) Anmeldenummer: 02772175.2
(22) Anmeldetag: 21.08.2002
(51) Int. Cl.: G01M 19/00

(54) **VERFAHREN ZUR QUANTITATIVEN ERMITTLUNG DES DYNAMISCHEN SITZKOMFORTS EINES SITZPOLSTERS**
METHOD FOR THE QUANTITATIVE DETERMINATION OF THE DYNAMIC SEATING COMFORT OF A SEAT PADDING
PROCEDE DE DETERMINATION QUANTITATIVE DU CONFORT D'ASSISE DYNAMIQUE D'UN REMBOURRAGE DE SIEGE

(30) Priorität: 02.10.2001 DE 10148662
(43) Veröffentlichungstag der Anmeldung: 30.06.2004
(73) Patentinhaber: DaimlerChrysler AG, 70567 Stuttgart (DE)
(72) Erfinder: EGER, Michael, 72401 Haigerloch (DE); KASSING, Lothar, 71154 Nufringen (DE); PFAHLER, Karl, 70180 Stuttgart (DE); RENNER, Lothar, 71154 Nufringen (DE)
(86) Internationale Anmeldenummer: PCT/EP2002/009302
(87) Internationale Veröffentlichungsnummer: WO 2003/031927

(56) Entgegenhaltungen:
- US-A- 5 060 174
- US-A- 5 877 436
- US-A- 6 009 750

## Beschreibung

Die Erfindung betrifft ein Verfahren zur quantitativen Ermittlung des dynamischen Sitzkomforts von Sitzpolstern.

Bei der Entwicklung von Sitzen, insbesondere von Fahrzeugsitzen geht es u.a. auch um einen hohen Sitzkomfort, weil gerade auf Fahrzeugsitzen die Insassen und vor allem der Fahrer u.U. viele Stunden bei geringer Bewegung auf dem Sitz verharren müssen. Hier spielen unter anderem Fragen einer optimalen Sitzdruckverteilung eine Rolle. Das Verhalten eines Sitzes in dieser Hinsicht ist durch mehrere Faktoren bestimmt, beispielsweise durch Art, Aufbau und Konfektionierung des mehrlagigen Verbundes des Bezugsmaterials sowie Werkstoff, Art und Aufbau des Sitzunterbaues und dgl. mehr. Verteilt sich der Sitzdruck eines Sitzpolsters beim Einsitzen einer Person ungünstig, so wird er beim längeren Sitzen eines Menschen als unangenehm und unbequem empfunden.

Im Laufe einer Sitzentwicklung werden unterschiedliche Sitz- und Polsterkonstruktionen als Versuchsmuster angefertigt und diese müssen untereinander objektiv und reproduzierbar hinsichtlich verschiedener Prüf- und Bewertungskriterien, so auch hinsichtlich des Druckkomforts, verglichen werden, um danach das beste Versuchsmuster auswählen zu können. Es werden nicht nur neue Versuchsmuster einer aktuellen Sitzentwicklung, sondern auch verschiedene Testsitze anderer Provenienz z.B. Sitze früherer Sitzgenerationen, gebrauchte Sitze oder Sitze aus fremden Entwicklungs- oder Fabrikationsstätten untereinander verglichen.

Nach einem aus der DE 196 01 974 C2 (nachfolgend kurz mit [2] zitiert) bekannten Verfahren zur quantitativen Ermittlung des Sitzkomforts von Sitzpolstern wird die Sitzdruckverteilung zwischen einem antropomorph gestalteten Prüfstempel und dem zu prüfenden Sitzpolster *statisch* gemessen. Dabei wird eine dünne und biegeschlaffe Meßmatte mit einer Vielzahl gesonderter, in die Meßmatte integrierter, rasterartig und flächendeckend verteilter, für sich ebenfalls flexibler Drucksensoren zwischen die Polsteroberfläche und den Prüfstempel gelegt und die Signalausgänge der Drucksensoren mit einer Auswerte-Einrichtung verbunden. Während einer realitätsnahen statischen Belastung der Sitzfläche des zu überprüfenden Sitzpolsters mit einer dem Einsitzgewicht einer durchschnittlichen Person entsprechenden Kraft werden die Signale der einzelnen Drucksensoren der Meßmatte ausgewertet und daraus nach einer bestimmten Rechenvorschrift eine Bewertungszahl des Druckkomforts des Polsters ermittelt. Bei der Ermittlung der Komfort-Bewertungszahl werden unterschiedliche, antropomorhe Empfindungsbereiche und unterschiedliche Empfindungsschwellen berücksichtigt. Zwar liefert das bekannte Verfahren objektive und reproduzierbare Bewertungszahlen des Sitzkomforts für unterschiedliche Sitzpolster, die auch mit dem subjektiven Komfortempfinden einer Vielzahl von Testpersonen korrelieren. Jedoch hat sich herausgestellt, dass diese statisch gewonnenen Komfort-Bewertungszahl nicht repräsentativ für den dynamischen Sitzkomfort eines Sitzes ist. D.h. ein bezüglich des statischen Sitzkomforts gut bewerteter Sitz muß keineswegs auch bei dynamischer Sitzbeanspruchung, z.B. bei Fahrt mit dem zugehörigen Fahrzeug über Schlechtwegstrecken, als optimal bequem empfunden werden. Die Beurteilung eines Sitzpolsters bei dynamischer Sitzbeanspruchung richtet sich offenbar nach völlig anderen Gesichtspunkten, als die Sitzpolster-Komfortprüfung bei statischem Einsitzen.

Der Sitzbelastungskörper nach der Druckschrift DE 197 20 854 C1 (nachfolgend kurz mit [1] zitiert) und der schwingungstechnisch weiter entwickelte Sitzbelastungskörper nach der DE 198 07 751 C1 (nachfolgend kurz mit [3] zitiert) gehen auf die gesonderte Problematik der Sitzpolster-Komfortprüfung unter *dynamischen* Aspekten ein. Der ebenfalls antro-pomorph gestaltete Sitzbelastungskörper nach [1] ist frei beweglich und entspricht dem Einsitzgewicht einer durchschnittlichen Person. Zur Erreichung des erforderlichen Einsitzgewichtes des Sitzbelastungskörpers ist passiver Ballast in Form mehrerer Gewichte innnenseitig in die Gesäßnachbildung und/oder an der Rückennachbildung befestigt. Mit dem frei beweglichen Sitzbelastungskörper sollen personen-unabhängig Schwingungsmessung an Fahrzeugsitzen durchgeführt werden, die im gesamten spektralen Bereich von 0 bis etwa 30 Hz zumindest qualitativ mit entsprechenden Testpersonen-Messungen vergleichbar sind. Ähnlich wie bei dem weiter oben beschriebenen Sitzprüfstempel für statische Sitzuntersuchungen sind auch bei dem hier in Rede stehenden frei beweglichen Sitzbelastungskörper die Gesäßnachbildung und die Rückennachbildung jeweils durch überpolsterte Hartteile gebildet, wobei letztere zumindest unter- bzw. rückenseitig einem menschlichen Skelett naturgetreu nachgebildet sind. Die Überpolsterung der Hartteile ist nach Lagenstärke, Weichheit, Elastizität und Dämpfungsverhalten sowie örtlicher Verteilung dieser Parameter den Weichteilen im Gesäß- bzw. Rückenbereich antropromorph nachgebildet, so dass die schwingungstechnische Ankopplung des Sitzbelastungskörpers an das Sitz- und Lehnenpolster möglichst exakt der entsprechenden Übergangsstelle vom Mensch in die Polster nachgebildet ist. Dies wird nach [1] als die dominierende Voraussetzung bei einer repräsentativen Schwingungsmessung angesehen, wobei ebenfalls wichtig sei, dass der Sitzbelastungskörper nicht nur eine dem Einsitzen einer natürlichen Person entsprechende Verformung der Polsteroberfläche, sondern auch eine dem natürlichen Einsitzen entsprechende Sitzdruckverteilung hervorruft. Eigendynamische Einflüsse einzelner Körperteile oder Körperregionen werden nach [1] gegenüber einer schwingungstechnisch realitätsnahen, d.h. antropomorph "weichen" Ankopplung des Sitzbelastungskörpers an die Polster des Fahrzeugsitzes als sekundär angesehen.

Um auch dynamische Einflüsse der in sich schwingenden Körpermasse bei schwingungstechnischen Untersuchungen von Fahrzeugsitzen realitätsnah simulieren und im Ergebnis erfassen zu können, sind bei dem weiterentwickelten Sitzbelastungskörper nach [3] die integrierten Ballastgewichte in Form von dreidimensional schwingungsfähigen Feder-Dämpfer-Masse-Systeme ausgebildet, wobei mindestens jeweils eine Schwingmasse so von einem Feder-Dämpfer-Medium umgeben ist, dass die Masse in allen drei Raumrichtungen schwingen kann.

Gemeinsam bei dem Sitzbelastungskörper nach [1] und dem nach [3] ist folgendes: Die Rückennachbildung ist relativ zur Gesäßnachbildung innerhalb eines begrenzten Winkelraumes um den Hüftgelenkpunkt verschwenkbar gelagert und elastisch im Sinne einer Strecklage von Rücken- und Gesäßteil vorgespannt. Die Oberschenkelnachbildungen des Gesäßteiles sind bis zum Kniegelenk ausgebildet, wobei im Kniegelenkbereich Unterschenkel- und Fußnachbildungen beweglich angekoppelte sind, die sich beweglich am Boden abstützen können. Die Gewichte des passiven Ballastes sind so innerhalb des Sitzbelastungskörpers verteilt, dass die gesamte Auflagekraft in der Berührungsfläche von Gesäßteil und Sitzpolster und die örtliche Sitzdruckverteilung der Auflagekraft und Sitzdruckverteilung beim Einsitzen einer natürlichen Testperson entspricht und dass sich außerdem eine etwa gleiche Schwerpunktlage und/oder ein etwa gleichgroßes Massenträgheitsmoment zumindest um eine parallel zum Hüftgelenk liegenden Achse ergibt.

Zur Durchführung von schwingungstechnischen Sitzuntersuchungen wird nach [1] der zu überprüfende Fahrzeugsitz auf einer Schwingungsplattform befestigt, die im Frequenzbereich von 0-30 Hz zu vertikalen Sinusschwingungen angeregt werden kann. Dann wird der Sitzbelastungskörper mit optimaler Sitzdruckverteilung auf den Fahrzeugsitz aufgesetzt und massearme Beschleunigungssensoren zwischen die Sitzfläche und dem in die optimale Sitzposition gebrachten Sitzbelastungskörper eingelegt. Bei der Schwingungsanregung des Sitzes mit dem aufgesetzten Sitzbelastungskörper mit definierter Frequenz und definierter Beschleunigungsamplitude kann dann über die eingelegten Beschleunigungssensoren die Antwortschwingung des aus zu prüfendem Sitz und Sitzbelastungskörper gebildeten Schwingungssystems für jede einzelne Anregungsschwingung bzw. Anregungsfrequenz ermittelt werden. Bei einer solchen schwingungstechnischen Untersuchung eines Fahrzeugsitzes wird die spektrale Verteilung der Vertikalschwingungen des Sitzbelastungskörpers ermittelt. Es wird gewissermaßen der Frequenzgang des Fahrzeugsitzes bei Belastung durch den Sitzbelastungskörper als spektrale Diagrammlinie ermittelt. Diese gibt lediglich das schwingungsdämpfende Verhalten eines Fahrzeugsitzes als ganzem bezüglich einer aufsitzende Person wieder. Dies ist zwar auch ein brauchbares Kriterium für die Beurteilung dynamischer Komfort-Eigenschaften von Fahrzeugsitzen, jedoch kann mit dem globalen Dämpfungsverhalten des Sitzes insgesamt nicht das mehr oder weniger unangenehme Schwingungsempfinden eines Menschen beim Sitzen auf einem dynamisch angeregten Fahrzeugsitz bewertet werden.

Die Aufgabe der Erfindung besteht darin, ein Verfahren anzugeben, das bei Komfortuntersuchungen von Fahrzeugsitzen eine quantitative, realitätsnahe und reproduzierbare Bewertungszahl über das mehr oder weniger unangenehme Schwingungsempfinden eines Menschen beim Sitzen auf einem dynamisch angeregten Fahrzeugsitz liefert. Die dynamische Schwingungsanregung des Fahrzeugsitzes entspricht der dynamischen Sitzbeanspruchung z.B. bei Fahrt mit dem zugehörigen Fahrzeug über eine Schlechtwegstrecke.

Ausgehend von dem geschilderten Stand der Technik wird diese Aufgabe erfindungsgemäß durch die Gesamtheit der Merkmale von Anspruch 1 gelöst.

Danach wird die gesamte Einsitzkraft des Sitzbelastungskörpers auf dem Sitzpolster als Integral der Sitzdruckverteilung in dem hier interessierenden Frequenzbereich von 0 - 30 Hz trägheitsfrei für jeden Zeitpunkt der Antwortschwingung des schwingungsfähigen Systems ermittelt. Bei der Auswertung der Daten wird zunächst der Frequenzgang des schwingungsfähigen Systems, d.h. die spektrale Verteilung der Schwingungsamplituden der Antwortschwingung, ermittelt und daraus das Integral dieser Funktion bis zu einer bestimmten Maximalfrequenz, z.B. 20 Hz oder 25 Hz gebildet, wobei dieser Integralwert als Bewertungszahl des dynamischen Sitzkomforts des Sitzpolsters verwendet wird. Diese Bewertungszahl gibt die schwingungsmäßige Beanspruchung des Sitzbereiches des menschlichen Körpers beim Einsitzen auf einen schwingungsangeregten Fahrzeugsitz wieder. Wenn der genannte Integralwert der Frequenzgangkurve groß ist, bedeutet dies eine starke schwingungsmäßige Beanspruchung des menschlichen Körpers durch den betreffenden Fahrzeugsitz; d.h. dieser Sitz wird auf Dauer als unbequem empfunden. Fahrzeugsitze mit niedrigem Integralwert werden hingegen bei Fahrt auf Schlechtwegstrecken als angenehmer empfunden.

Während das aus der Druckschrift [1] bzw. [3] bekannte Verfahren zur Durchführung von schwingungstechnischen Sitzuntersuchungen die Dämpfungseigenschaft des Sitzpolsters für Schwingungen, also eine isoliert dem Sitzpolster zuschreibbare Eigenschaft, zutage bringt, wird durch das erfindungsgemäße Verfahren eine Bewertung möglich, die das Zusammenwirken von Mensch und Sitzpolster betrifft und die dem Empfinden des Menschen für angeregte Sitzschwingungen entspricht.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: einen auf einen Fahrzeugsitz aufgesetzten, im Gesäß- und Rückenbereich antropomorph gestalteten Prüfkörper mit vervollständigten unteren Gliedmaßen zur bodenseitigen Abstützung der Oberschenkelnachbildungen, sowie mit einer im Sitzbereich aufgelegten, flexiblen Meßmatte,
- Fig. 2: die Rastereinteilung der flexiblen Meßmatte sowie die Andeutung der ausgewählten Kraftmeßsensoren,
- Fig. 3: in stark schematisierter Weise den Meßaufbau während einer Meßfahrt auf einer Schlechtwegstrecke,
- Fig. 4a, 4b und 4c: den bei einer Meßfahrt gewonnenen Messaufschrieb des zeitlichen Verlaufes der Sitzbelastung bei einem harten (Figur 4a), einem normalen (Figur 4b) und bei einem weichen Fahrzeugsitz (Figur 4c),
- Fig. 5: die Diagramme einer Fourier-Frequent-Transformation (FFT) der drei Verläufe nach den Figuren 4a, 4b und 4c, und
- Fig. 6: die Integralfunktionen der drei FFT-Diagramme nach Figur 5.

Das Verfahren zum Ermitteln einer für die Güte des dynamischen Sitzkomforts von Polstern 2, 3 eines Straßenfahrzeuges 25 kann im Rahmen der Erfindung auf vielfältige Weise ausgeführt werden. In jedem Fall muß der zu prüfende Fahrzeugsitz 1 realitätsnah belastet und zu Schwingungen angeregt werden. Sowohl was die Belastung, aber noch viel mehr was die Schwingungsanregung anlangt, gibt es mehrere Möglichkeiten.

Die Belastung des zu prüfenden Fahrzeugsitzes 1 kann durch eine natürliche Testperson oder durch einen hinsichtlich des Einsitzens antropomorph gestalteten Prüfkörpers 15 erfolgen. Die Belastung durch eine natürliche Testperson hat den Vorteil, dass eine solche in aller Regel ohne weiters, insbesondere ohne vorherige Inverestitionen, zur Verfügung steht. Der Einsatz von natürlichen Testpersonen hat aber den Nachteil, dass die Tests nicht stets mit der selben Testperson durchgeführt werden und dadurch die Meßergebnisse nicht ohne weiteres untereinander vergleichbar sind. Deshalb ist die Belastung der zu testenden Fahrzeugsitz mit einem antropomorph gestalteten Prüfkörper trotz der dazu erforderlichen Investitionen eher zu empfehlen.

Insbesondere was die Schwingungsanregung des so gebildeten schwingungsfähigen Körper/Sitz-Systems anlangt, so gibt es diesbezüglich unterschiedliche Möglichkeiten. Und zwar kann das aus Sitzbelastungskörper und Fahrzeugsitz gebildete, schwingungsfähige System isoliert für sich, beispielsweise auf einem Schwingungsprüfstand für Fahrzeugsitze, oder im Einbauzustand in dem zugehörigen Fahrzeug 25 zu Schwingungen angeregt werden. Die letztere Alternative wird in sofern bevorzugt empfohlen, als dann nämlich das Eigenschwingungsverhalten des Fahrzeuges mit in das Ergebnis der Schwingungsmessung mit eingeht. Ein und der selbe Fahrzeugsitz, der bei Schwingungsmessungen in dem einen Fahrzeugtyp zu guten Meßergebnissen führt, d.h. in diesem Fahrzeugtyp als schwingungsmäßig sehr komfortabler Sitz bewertet wurde, muß keineswegs beim Test in einem anderen Fahrzeugtyp zu einer ebenso guten Komfortbewertung führen. Die Schwingungsanregung des Fahrzeuges seinerseits kann bei einer solchen Untersuchung realitätsnah durch Fahrt über eine Schlechtwegstrecke oder auf einem sog. Rüttelprüfstand erfolgen, bei dem jede der vier Radnaben des Fahrzeuges an jeweils einen Rüttelbock befestigt und die vier Rüttelböcke programmgesteuert und phasenzugeordnet realitätsnah entsprechend der Fahrt über eine Schlechtwegstrecke zu Schwingungen angeregt werden. Zwar erfordert die Fahrt über eine Schlechtwegstrecke nicht die Investition eines teuren Fahrzeug-Rüttelprüfstands. Andererseits setzt die Schwingungsanregung durch Fahrt über eine Schlechtwegstrecke voraus, dass die Testfahrt stets über die gleiche Straße und den gleichen Streckenabschnitt darauf und stets unter den selben Fahrbedingungen, wie Straßenzustand (trocken), Geschwindigkeit (konstant, etwa 60 km/h), Geradeausfahrt erfolgen kann, was u.U. nur unter Einschränkungen möglich ist. Außerdem führt ein Schwingungstest von Fahrzeugsitzen an unterschiedlichen Entwicklungsstandorten durch Fahrt über eine jeweils lokal verfügbare, d.h. unterschiedliche Schlechtwegstrecke u.U. zu leicht unterschiedlichen Meßergebnissen. In jedem Fall ist eine Schwingungsanregung durch Fahrt über eine Schlechtwegstrecke problematisch, wenn der gleiche Fahrzeugsitz von unterschiedlichen, örtlich weit auseinander arbeitenden Entwicklungsteams getestet werden soll. Hier ist eher eine Schwingungsanregung jeweils durch einen Fahrzeug-Rüttelprüfstand zu empfehlen, die an beiden Standorten durch ein und das selbe Anregungsprogramm gespeist sein können.

Bei einer schwingungsmäßigen Untersuchung des Fahrzeugsitzes kann das aus Sitzbelastungskörper und Fahrzeugsitz gebildete, schwingungsfähige System - wie gesagt - auch durch einen Sitzprüfstand zu Schwingungen im gewünschten Spektrum angeregt werden. Diese Anregungsmöglichkeit ist in sofern vorteilhaft, als der Investitionsaufwand für einen solchen Prüfstand vergleichsweise gering gegenüber einem Fahrzeug-Rüttelprüfstand ist. Außerdem ist eine Schwingungsuntersuchung des Fahrzeugsitzes wetterunabhängig in der Halle und unter stets gleichen Bedingungen durchgeführt werden. Auch bei einer Schwingungsanregung durch einen Sitzprüfstand gibt es wiederum verschiedene Möglichkeiten.

Und zwar kann das Körper/Sitz-System durch Sinusschwingungen angeregt werden, wobei die Anregungsfrequenz langsam, d.h. quasi-statisch verändert und durch das gewünschte Spektrum von 0 bis 30 Hz hindurch gefahren wird. Die Amplituden der sich jeweils auf die Schwingungsanregung einstellende Anwortschwingung werden in Abhängigkeit von der Anregungsfrequenz mitgeschrieben. Dieser Amplituden/Frequenz-Aufschrieb stellt den Frequenzgang des schwingungsfähigen Körper/Sitz-Systems dar.

Zum anderen kann das Körper/Sitz-System durch den Sitzprüfstand mit einem stochastischen und sich zeitlich verändernden Gemisch von Schwingungen angeregt werden. Die stochastische Anregungsschwingung wurde zuvor auf einer Meßfahrt über eine Schlechtwegstrecke gemessen. Die stochastische Anregung des Körper/Sitz-Systems muß eine gewisse Zeit lang aufrecht erhalten und die ebenfalls stochastische Antwortschwingung des Systems aufgezeichnet werden. Aus dem zeitlichen Verlauf der Antwortschwingung wird durch eine Fourier-Frequenz-Transformation der Frequenzgang des schwingungsfähigen Körper/Sitz-Systems ermittelt, der vorliegend von Interesse ist.

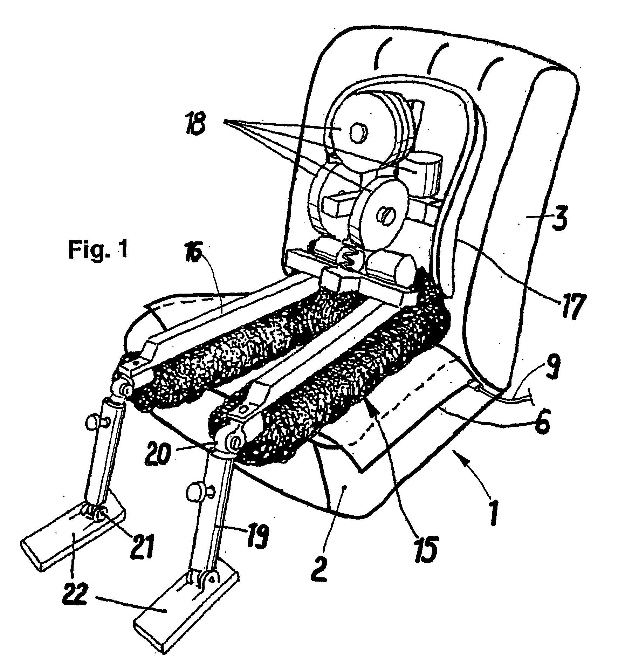

Bei dem in Figur 1 dargestellten Ausführungsbeispiel wird der Fahrzeugsitz 1 während der schwingungsmäßigen Untersuchung durch einen antropomorph gestalteten, frei beweglichen Prüfkörper 15 belastet, der unter Zwischenfügung einer lagedefiniert auf das Sitzpolster 2 aufgelegten Meßmatte 6 seinerseits ebenfalls lagedefiniert auf das Sitzpolster aufgesetzt und an das Lehnenpolster 3 angelehnt ist.

Der Prüfkörper 15 besteht aus einem überpolsterten Oberschenkel- und Gesäßbereich 16, aus einem im Hüftgelenkpunkt gelenkig daran angeschlossenen, ebenfalls überpolsterten Rückenbereich 17 und aus einem Paar von an den Oberschenkelnachbildungen im Kniegelenkbereich 20 gelenkig angeschlossenen, sich am Boden über gelenkig 21 angeschlossene Fußplatten 22 abstützende Unterschenkelnachbildungen 19. Die Hartteile des Oberschenkel- und Gesäßbereichs 16 sowie die des Rückenbereichs 17 sind zumindest unter- bzw. anlageseitig der Form des Beckenknochens und der Oberschenkeln einschließlich der Oberschenkel-Gelenke eines menschlichen Skelettes naturgetreu nachgebildet. Die Überpolsterungen der Hartteile sind den natürlichen Weichteilen im Gesäß- und Rückenbereich nach Lagenstärke, Weichheit, Elastizität und Dämpfungsverhalten sowie örtlicher Verteilung dieser Parameter insbesondere im Bereich der beiden Sitzdruckpunkte möglichst naturgetreu nachgebildet. Ferner ist der antropomorph gestaltete Prüfkörper 15 zur Erreichung des erforderlichen Einsitzgewichtes mit mehreren Ballastgewichten 18 versehen, die am Oberschenkel- und Gesäßbereich 16 befestigt und/oder innenseitig am Rückenbereich 17 gehalterter sind.

Der Prüfkörper ist zweckmäßigerweise in seinen Proportionen und in seinem Gewicht so gestaltet, dass er dem Durchschnitt aller männlichen Personen, d.h. einem 50-Percentil-Mann entspricht. Zwar sind Frauen gerade im Gesäßbereich anders proportioniert als Männer, so dass es vorteilhaft erscheint mag, neben Messungen mit einem männlichen 50-Percentil-Prüfkörper auch Messungen mit einem weiblichen 50-Percentil-Prüfkörper durchzuführen. Die Unterschiede dürften aber weniger stark ins Gewicht fallen im Vergleich zu den Unterschieden zwischen einem 50-Percentil-Mann und einem sehr großen 95-Percentil-Mann oder zu einem sehr kleinen 5-Percentil-Mann. Vergleichsmessungen mit einem männlichen und mit einem weiblichen 50-Percentil-Prüfkörper würden also vermutlich nur marginale Unterschiede im Meßergebnis zutage bringen, die nicht - zumindest nicht signifikant - oberhalb der normalen Meßunsicherheit bzw. -streuung liegen dürften. Es könnte allenfalls zweckmäßig sein, das Meßergebnis dadurch etwas zuverlässiger zu gestalten indem Mehrfachmessungen unter Verwendung eines männlichen und eines weiblichen 50-Percentil-Prüfkörpers durchgeführt werden und aus den Endwerten der Einzelmessungen ein Mittelwert gebildet wird. Eine solche Meßwertabsicherung ließe sich beliebig erweitern durch Mehrfachmessungen nicht nur mit männlichen und weiblichen 50-Percentil-Prüfkörpern, sondern auch mit 5-Percentil-Prüfkörpern und 95-Percentil-Prüfkörpern, jeweils männlich und weiblich und durch anschließende Mittelwertbildung.

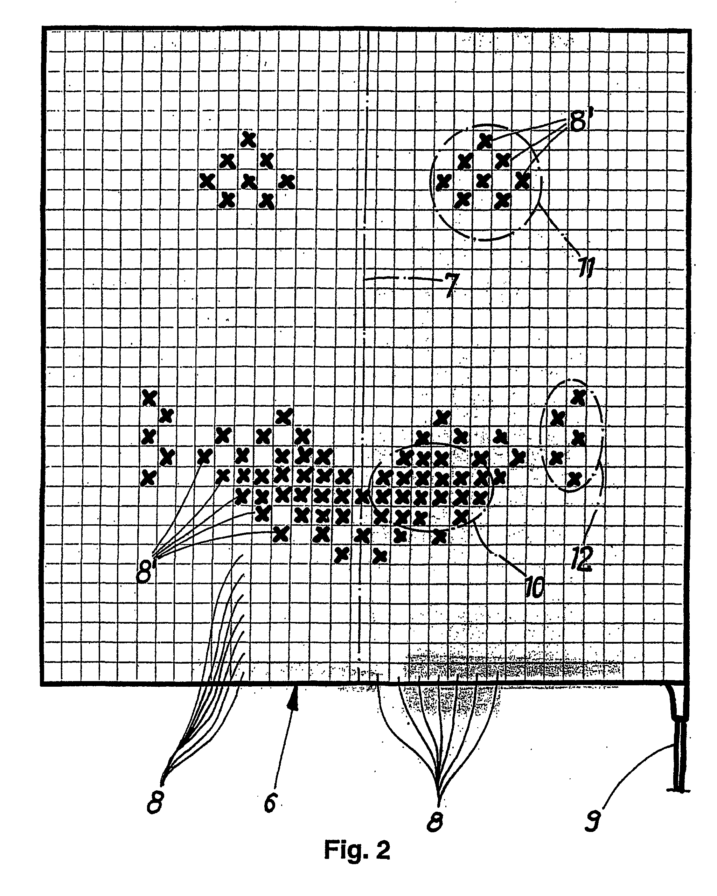

Die für eine schwingungsmäßige Untersuchung des Fahrzeugsitzes erforderliche, auf dem Sitzpolster des Fahrzeugsitzes lagedefiniert aufzulegende, flexible Meßmatte 6 ist mit einer Vielzahl gesonderter Kraftmeßsensoren 8 versehen, die in sich ebenfalls jeweils flexibler gestaltet sind. Die in die Meßmatte integrierten Kraftmeßsensoren sind rasterartig und flächendeckend darin verteilt. Bei dem in Figur 2 dargestellten Ausführungsbeispiel sind die im Flächenbedarf quadratischen Kraftmeßsensoren 6 durch ein schachbrettartiges Linienraster angedeutet; entlang jeder Seite der Meßmatte sind jeweils 32 Felder vorgesehen, die Meßmatte enthält also 32 x 32 = 1024 Kraftmeßsensoren. Für die Eignung der Meßmatte zu Schwingungsuntersuchungen ist Voraussetzung, dass die Kraftmeßsensoren jeweils bis zu einer Frequenz von etwa 25 Hz praktisch hysteresefrei arbeiten. Die Kraftmeßsensoren arbeiten nach dem .kapazitiven Prinzip. Die gegenüberliegenden Pole eines jeden Sensors sind jeweils mit einem nach außen, zu einer Auswerte-Einrichtung führenden Signalanschluß versehen. Allerdings muß nicht jeder einzelne Kraftmeßsensor mit einem separaten Paar von Leitungsanschlüssen versehen sein. Vielmehr ist es ausreichend, wenn die auf der einen Mattenseite liegenden Pole der Kraftmeßsensoren zeilenweise durch einen ersten Satz von Leitungen und die auf der gegenüberliegenden Mattenseite liegenden Pole spaltenweise durch einen zweiten Satz von Leitungen untereinander verbunden und diese insgesamt 2 x 32 = 64 Leitungen in einem entsprechend vieladrigen Anschlußkabel 9 isoliert nach außen geführt werden. Durch unterschiedliche Paarung der ersten und zweiten Leitungen kann jeder einzelne Kraftsensor für sich adressiert werden.

Die Signalausgänge der Kraftmeßsensoren müssen mit einer Abtastfrequenz von etwa 100 Hz abgetastet werden, um auch bei den höheren interessierenden Frequenzen der Antwortschwingung genügent Meßpunkte innerhalb eines Schwingungszyklus zu bekommen. Es ist nicht erforderlich, die Meßsignale aller 1024 Kraftmeßsensoren der Meßmatte auszuwerten. Dies würde beim derzeitigen Stand der Computertechnik und bei der genannten Abtastfrequenz unvertretbar hohe Anforderungen an die Auswerte-Einheit bezüglich Rechenkapazität und Rechengeschwindigkeit stellen. Vielmehr ist durch eine sinnvolle lokale Auswahl an Kraftmeßsensoren deren Anzahl auf etwa 70 bis 90 Stück, also auf ein Maß reduziert worden, das heute bereits ohne weiteres durch bewegliche Rechner (Laptop) bei der genannten Abtastfrequenz verarbeitet werden kann. Bei dem in Figur 2 gezeigten Ausführungsbeispiel sind 76 Sensoren 8' der Meßmatte aktiv.

Denkbar ist eine gleichmäßige Verteilung der ausgewählten "aktiven" Kraftmeßsensoren über der Meßmatte, was auch zu brauchbaren Meßergebnissen führt. Deutlicher sind jedoch die Messungen, wenn die ausgewählten Kraftmeßsensoren 8' in den hauptsächlich belasteten Bereichen und hier wiederum im Sitzhöckerbereich 10 konzentriert sind. Bei ordnungsgemäßer Anordnung der Meßmatte auf dem Fahrzeugsitz und des Prüfkörpers auf der Meßmatte erstrecken sich die Belastungsfelder Symmetrisch zur Mittellinie 7 der Meßmatte. Es wird hier neben den beiden Sitzhöckerbereichen 10, die die Hauptlast aufnehmen, auch noch zwei Seitenbackenbereiche 12 und zwei Unterschenkelbereiche sowie ein Steißbeinbereich unterschieden. Der in Figur 2 angedeutete Sitzkantenbereich 11 stellt den vorderen Teil des Unterschenkelbereichs dar.

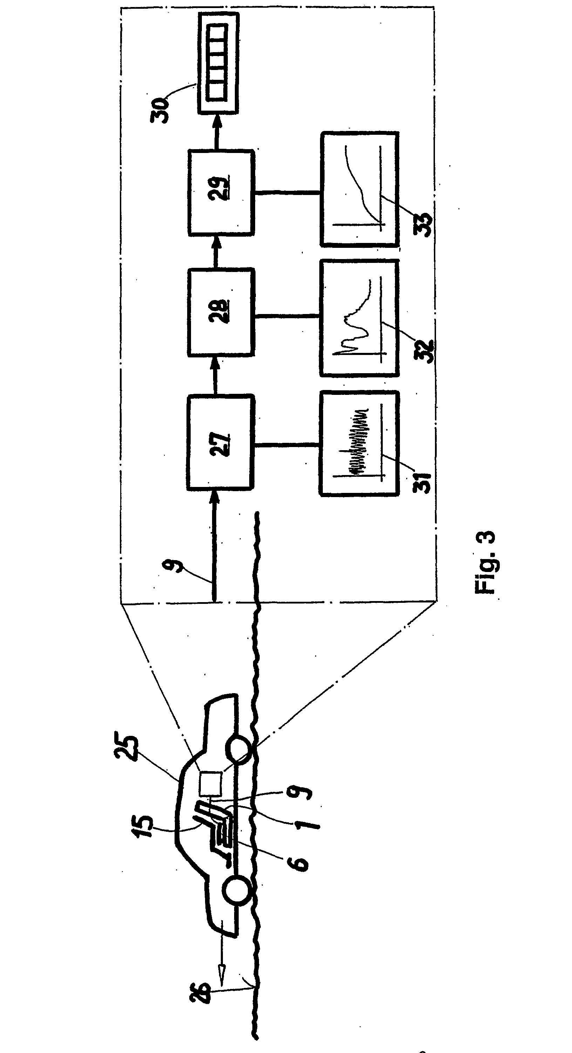

Nachdem der ordnungsgemäß in das zugehörige Straßenfahrzeug 25 (Figur 3) eingebaute Fahrzeugsitz 1 mit der Meßmatte 6 präpariert und der antropmorphe Prüfkörper 15 darauf richtig positioniert und durch einen Sicherheitsgurt am Lehnenpolster 3 gesichert ist, werden die Signalanschlüssen der Kraftmeßsensoren 8' (Anschlußkabel 9) mit der Auswerteeinheit verbunden. Letztere besteht bei dem in Figur 3 dargestellten Ausführungsbeispiel im Wesentlichen aus einem Rechner 27, einem FFT-Analysator 28, einem Integrator 29 und aus einer Endanzeige 30. Das richtige Einsitzen des Prüfkörpers 15 muß vor der Messung noch einmal kontrolliert werden, was durch Überprüfung der statischen Gewichtsanzeige vor einer Schwingungsanregung erfolgen kann. Und zwar muß die Ist-Gesamtkraft aller ausgewählten Kraftmeßsensoren 8' mit einer zuvor für den verwendeten Sitzbelastungskörper ermittelten Soll-Gesamtkraft übereinstimmen. Gegebenenfalls muß die Sitzposition des Sitzbelastungskörpers auf dem Fahrzeugsitz 1 so lange korrigiert werden, bis eine Soll/Ist-Übereinstimmung erzielt ist. Wird eine natürliche Testperson als Sitzbelastungskörper verwendet, so darf die Messung darüber hinaus erst begonnen werden, wenn die Meßmatte Körperwärme angenommen hat, was frühestens nach ungefähr 5 bis 7 Minuten der Fall ist.

Bei dem in Figur 3 dargestellten Ausführungsbeispiel wird zur Durchführung einer Messung das Körper/Sitz-System durch Fahrt mit dem Fahrzeug 25 über eine Schlechtwegstrecke 26 zu stochastischen Schwingungen angeregt, so dass auch Anregungsschwingungen innerhalb des hier unteressierenden Frequenzbereiches von 0 bis 30 Hz dabei sind. Die während der Anregungszeit an den Kraftmeßsensoren anstehenden Signale werden in Echtzeit in der genannten Auswereteeinheit 27 - 30 ausgewertet. Denkbar ist es auch, stattdessen lediglich den zeitlichen Verlauf der einzelnen Signale aufzuzeichnen und später die Auswertung off-line im Labor durchzuführen, wobei mehr Rechenzeit zur Verfügung steht.

Die Meßfahrt auf der Schlechtwegstrecke 26 soll bei allen Messungen unter gleichen Bedingungen durchgeführt werden, nämlich nur Geradeausfahrt mit konstanter Geschwindigkeit von etwa 50 bis 60 km/h auf trockener Fahrbahn. Die Meßfahrt wird über eine Meßzeit von mindestens etwa 5 Minuten hinweg durchgeführt. Für den Fall, dass eine geradlinige Schlechtwegstrecke von etwa fünf km Länge nicht verfügbar ist, wird ein kürzeres Stück einer geradlinige Schlechtwegstrecke 26 mehrfach hin und zurück durchfahren, wobei die Meßsignale und deren Verarbeitung während des Wendevorganges unterdrückt werden.

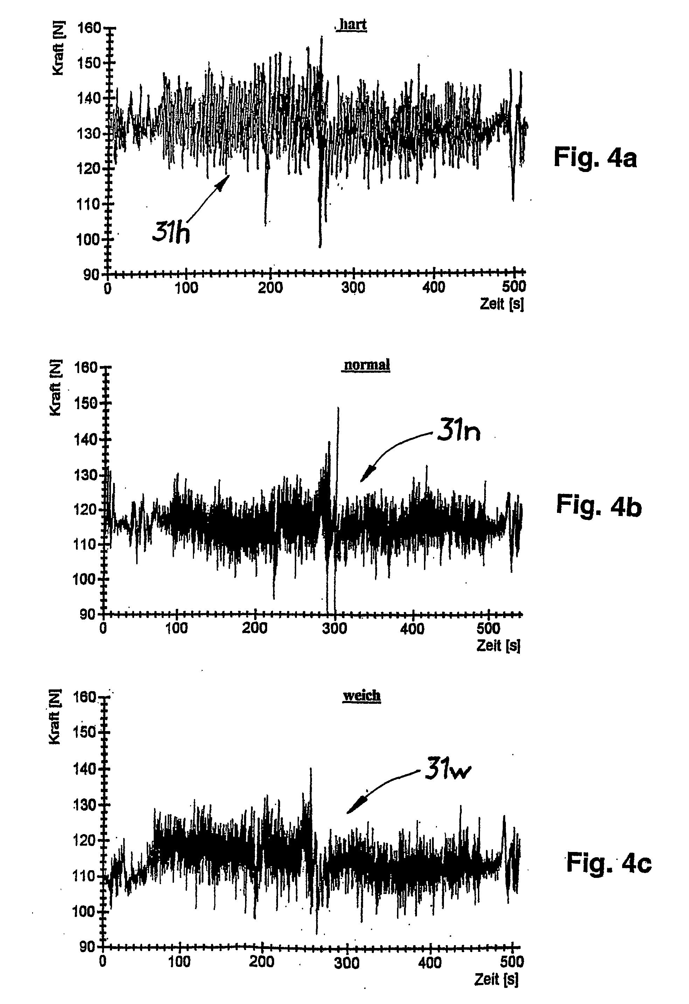

Bei der Verarbeitung der Meßsignale werden in jedem Fall zunächst die Signale aller Kraftmeßsensoren 8 zumindest angenähert phasengleich zu einem Gesamtsignal 31 addiert, was in dem Rechner 27 erfolgt. In den Figuren 4a, 4b und 4c ist jeweils ein Kraftverlauf dargestellt, der an einem harten Fahrzeugsitz (Figur 4a; Gesamtsignal 31h), an einem normalen (Figur 4b; Gesamtsignal 31n) und an einem weichen Fahrzeugsitz (Figur 4c; Gesamtsignal 31w) aufgenommenen wurde.

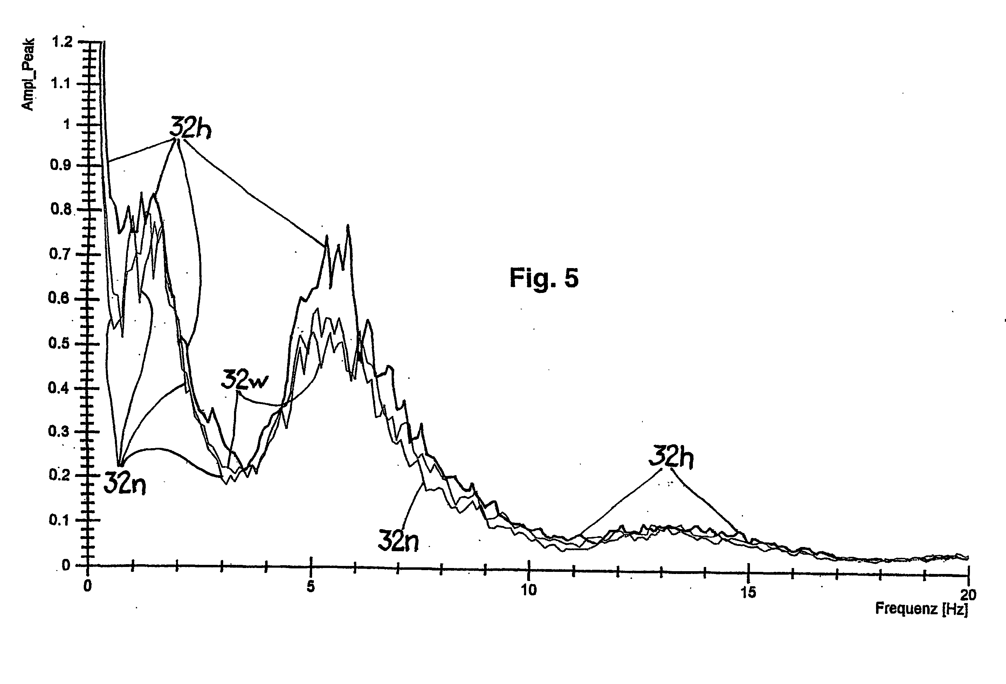

Aus dem zeitlichen Verlauf dieses Gesamtsignals 31 wird durch den FFT-Analysator 28 die spektrale Verteilung der Amplituden der Antwortschwingung des Körper/Sitz-Systems - der sog. Frequenzgang 32 - ermittelt. Die verschiedenen Frequenzgänge 32h, 32n und 32w des harten, des normalen und des weichen Fahrzeugsitzes sind in Figur 5 im unmittelbaren Vergleich dargestellt. Zwar sind die Unterschiede noch nicht sehr auffallend aber doch trotz gewisser systematischer Übereinstimmungen der Frequenzgänge, z.B. bezüglich der spektralen Lage der Resonanzstellen, in der Tendenz erkennbar. Die Resonanzüberhöhung an der Resonanzzstelle 5 Hz ist beim harten Sitz deutlich höher als beim weichen oder beim normalen Sitz. Tendenziell verläuft der Frequenzgang 32n des normalen Sitzes überall auf dem niedrigsten Niveau.

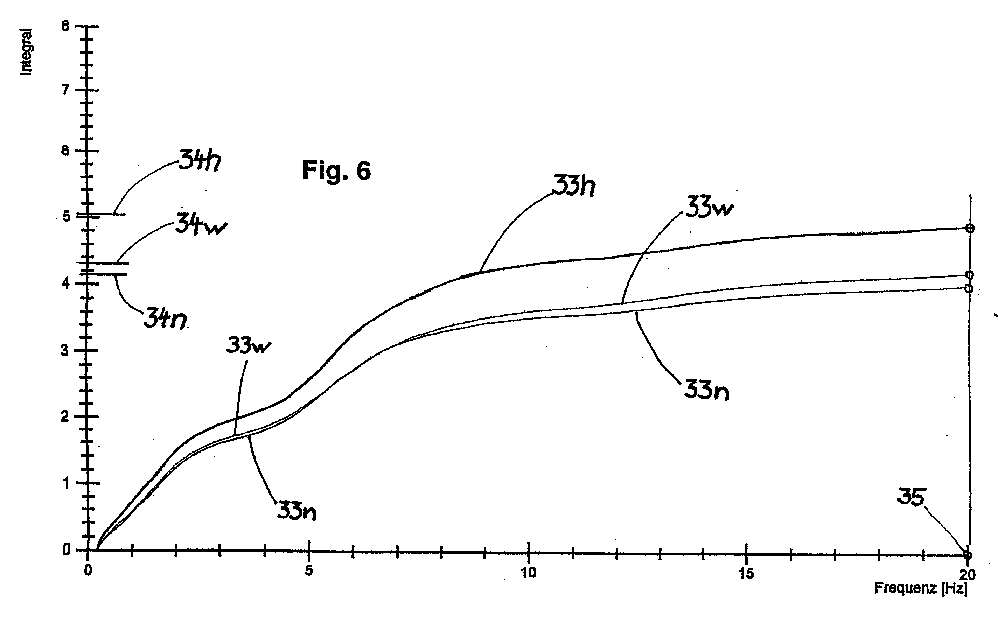

In dem Integrator 29 wird das Flächenintegral 33 dieses Frequenzgangs bis zu einer bestimmten Endfrequenz 35 ermittelt, wobei der Endwert 34h, 34n, 34w dieses Flächenintegrals 33h, 33n, 33w bei der Endfrequenz 35, im Beispiel 20 Hz, als Bewertungszahl des dynamischen Sitzkomforts des Polsters des Fahrzeugsitzes 1 verwendet wird. Die Integral-Linien 33h, 33n und 33w des harten, normalen und des weichen Sitzes (Figur 6) lassen die Unterschiede zwischen den verschiedenen Sitzen deutlicher erkennen, als die Frequenzgänge nach Figur 5. Insbesondere kann durch den Endwert 34h, 34n oder 34w durch einen bloßen Zahlenwert der Schwingungskomfort des betreffenden Fahrzeugsitzes in vergleichbarer und reproduzierbarer Weise zum Ausdruck gebracht werden.

Der Vorteil der Erfindung gegenüber dem aus [1] bekannten Meßverfahren besteht zum einen darin, dass eine leicht vergleichbare Bewertungszahl als Ergebnis der Messung gewonnen wird, die nicht nur repräsentativ für dass zu messende Kriterium des Sitzes ist, sondern die auch bei späteren Messungen mit nur geringer Streuung reproduziert werden kann. Ein weiterer wichtiger Vorteil des erfindungsgemäßen Meßverfahrens gegenüber dem Stand der Technik besteht darin, dass durch die Erfindung tatsächlich die Empfindsamkeit des menschlichen Körpers für Sitzschwingungen meßtechnisch erfaßt wird, d.h. durch die gewonnene Komfort-Bewertungszahl kann eine quantitative und vergleichbare Aussage bezüglich der schwingungsmäßigen Belastung des menschlichen Körpers bei längerer Fahrt mit dem betreffenden Fahrzeugsitz getroffen werden, was bisher nicht möglich war.

## Patentansprüche

1. Verfahren zum Ermitteln einer für die Güte des dynamischen Sitzkomforts von Polstern (2, 3) eines Fahrzeugsitzes (1), insbesondere für Straßenfahrzeuge (25), repräsentativen Bewertungszahl (34h, 34n, 34w),
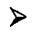 bei welchem Verfahren vorbereitend für eine Messung auf das Sitzpolster (2) des Fahrzeugsitzes (1) zunächst eine flexible Meßmatte (6) lagedefiniert aufgelegt wird, welche mit einer Vielzahl gesonderter, in die Meßmatte (6) integrierter, rasterartig und flächendeckend verteilter, in sich ebenfalls jeweils flexibler Kraftmeßsensoren (8) versehen ist, die j.eweils bis zu einer Frequenz von etwa 25 Hz praktisch hysteresefrei arbeiten und die jeweils mit nach außen, zu einer Auswerte-Einrichtung führenden Signalanschlüssen versehen sind,
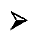 woraufhin der so präparierte Fahrzeugsitz (1) mit einem Sitzbelastungskörper realitätsnah belastet und dieser lagedefiniert, insbesondere mittig auf dem Fahrzeugsitz (1) positioniert wird, wobei als Sitzbelastungskörper entweder eine natürliche Testperson oder ein bezüglich des Schwingungsverhaltens auf dem Fahrzeugsitz antropomorph gestalteter, frei beweglicher Prüfkörper (15) verwendet wird,
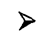 bei welchem Verfahren zur Durchführung einer Messung das aus dem so präparierten Fahrzeugsitz (1) und aus dem darauf positionierten Sitzbelastungskörper bestehende Körper/Sitz-System zumindest innerhalb eines Frequenzbereiches von 0 bis 30 Hz zu Schwingungen angeregt wird und die an den Signalanschlüssen der Kraftmeßsensoren (8) während der Anregungszeit anstehenden Signale aufgezeichnet und/oder ausgewertet werden, wobei die Signale aller Kraftmeßsensoren (8) zumindest angenähert phasengleich zu einem Gesamtsignal (31h, 31n, 31w) addiert werden,
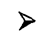 aus dem zeitlichen Verlauf dieses Gesamtsignals (31h, 31n, 31w) wird die spektrale Verteilung der Amplituden der Antwortschwingung des Körper/Sitz-Systems - der sog. Frequenzgang (32h, 32n, 32w) - ermittelt und das Flächenintegral (33h, 33n, 33w) dieses Frequenzgangs (32h, 32n, 32w) bis zu einer bestimmten Endfrequenz (35) ermittelt, wobei der Endwert (34h, 34n, 34w) dieses Flächenintegrals (33h, 33n, 33w) bei der Endfrequenz (35) als Bewertungszahl des dynamischen Sitzkomforts des Polsters des Fahrzeugsitzes (1) verwendet wird.

2. Verfahren nach Anspruch 1,
**dadurch gekennzeichnet, dass**
der alternativ verwendbare antropomorph gestaltete, frei bewegliche Prüfkörper (15) aus einem überpolsterten Oberschenkel- und Gesäßbereich (16), aus einem im Hüftgelenkpunkt gelenkig daran angeschlossenen, ebenfalls überpolsterten Rückenbereich (17) und aus einem Paar von an den Oberschenkelnachbildungen im Kniegelenkbereich (20) gelenkig angeschlossenen, sich am Boden über gelenkig (21) angeschlossene Fußplatten (22) abstützende Unterschenkelnachbildungen (19) besteht, wobei die Hartteile des Oberschenkel- und Gesäßbereichs (16) sowie die des Rückenbereichs (17) zumindest unter- bzw. anlageseitig der Form des Beckenknochens und der Oberschenkeln einschließlich der Oberschenkel-Gelenke eines menschlichen Skelettes naturgetreu nachgebildet sind, und wobei die Überpolsterung der Hartteile den natürlichen Weichteilen im Gesäß- und Rückenbereich nach Lagenstärke, Weichheit, Elastizität und Dämpfungsverhalten sowie örtlicher Verteilung dieser Parameter insbesondere im Bereich der beiden Sitzdruckpunkte möglichst naturgetreu nachgebildet sind, wobei der antropomorph gestaltete, frei bewegliche Prüfkörper (15) ferner zur Erreichung des erforderlichen Einsitzgewichtes mit passivem Ballast in Form mehrerer innenseitig in den Oberschenkel- und Gesäßbereich (16) eingelegter und/oder an der Innenseite des Rückenbereichs (17) gehalterter Ballastgewichte (18) versehen ist.

3. Verfahren nach Anspruch 1,
**dadurch gekennzeichnet, dass**
das Körper/Sitz-System mittels stochastischer Schwingungen angeregt und der Frequenzgang (32) aus dem Gesamtsignal (31) der Antwortschwingung durch eine Fourier-Frequenztransformation (28) ermittelt wird.

4. Verfahren nach Anspruch 3,
**dadurch gekennzeichnet, dass**
der bezüglich seines dynamischen Sitzkomforts zu bewertende Fahrzeugsitz (1) in das zu ihm gehörige Fahrzeug (25) bestimmungsgemäß eingebaut wird und das Körper/Sitz-System von den Rädern des Fahrzeuges (25) her stochastisch zu Schwingungen angeregt wird.

5. Verfahren nach Anspruch 4,
**dadurch gekennzeichnet, dass**
die stochastische Schwingungsanregung durch Fahrt des Fahrzeuges (25) über eine Schlechtwegstrecke (26) erfolgt.

6. Verfahren nach Anspruch 1,
**dadurch gekennzeichnet, dass**
aus der Vielzahl der in der Meßmatte (6) integrierten Kraftmeßsensoren (8) etwa 70 bis 100 Kraftmeßsensoren (8') ausgewählt und nur deren Signale weiterverarbeitet werden, wobei die ausgewählten Kraftmeßsensoren (8') bevorzugt im Sitzhöckerbereich (10) angeordnet sind.

7. Verfahren nach Anspruch 1,
**dadurch gekennzeichnet, dass**
vor Meßbeginn kontrolliert wird, ob die Ist-Gesamtkraft aller Kraftmeßsensoren mit einer zuvor für den verwendeten Sitzbelastungskörper ermittelten Soll-Gesamtkraft übereinstimmt und so lange die Sitzposition des Sitzbelastungskörpers auf dem Fahrzeugsitz (1) korrigiert wird, bis eine Soll/Ist-Übereinstimmung erzielt ist.

8. Verfahren nach Anspruch 1,
**dadurch gekennzeichnet, dass**
bei Verwendung einer natürlichen Person als Sitzbelastungskörper die Schwingungsmessung erst begonnen wird, wenn die Meßmatte Körperwärme angenommen hat.

9. Verfahren nach Anspruch 5,
**dadurch gekennzeichnet, dass**
die Meßfahrt auf der Schlechtwegstrecke (26) bei Geradeausfahrt mit konstanter Geschwindigkeit von etwa 50 bis 60 km/h auf trockener Fahrbahn durchgeführt wird.

10. Verfahren nach Anspruch 9,
**dadurch gekennzeichnet, dass**
die Meßfahrt über eine Meßzeit von mindestens etwa 5 Minuten hinweg durchgeführt wird.

11. Verfahren nach Anspruch 10,
**dadurch gekennzeichnet, dass**
für den Fall, dass eine geradlinige Schlechtwegstrecke (26) von etwa fünf km Länge nicht verfügbar ist, ein kürzeres Stück einer geradlinige Schlechtwegstrecke (26) mehrfach hin und zurück durchfahren wird, wobei die Meßsignale und deren Verarbeitung während des Wendevorganges unterdrückt werden.

## Claims

1. A process for determining a ranking (34h, 34n, 34w) representative of the quality of the dynamic sitting comfort of seat bolsters (2, 3) of a vehicle seat (1), in particular for road vehicles (25),
- in which process in preparation for measurement a flexible measuring mat (6), which is provided with a plurality of separate, inherently flexible force sensors (8) which are integrated into the measuring mat (6) distributed in the manner of a grid to cover its entire surface, which operate practically free of hysteresis up to a frequency of some 25 Hz and which are each provided with signal connections leading outward to an evaluation device, is placed in a defined position on the seat bolster (2) of the vehicle seat (1),
- whereupon the vehicle seat (1) prepared in this manner is loaded in a relatively realistic manner with a seat loading body and said body is positioned on the vehicle seat (1), in particular in the centre thereof, either a real test person or an articulated test dummy (15) designed anthropomorphically in relation to the vibration behaviour on the vehicle seat being used as the seat loading body,
- in which process for carrying out a measurement the body/seat system consisting of the vehicle seat (1) prepared in the aforementioned manner and the seat loading body placed thereupon is excited to vibration at least within a frequency range of 0 to 30 Hz and the signals received at the signal connections of the force sensors (8) during the excitation period are recorded and/or evaluated, the signals from all the force sensors (8) being added together at least approximately in phase to form a total signal (31h, 31n, 31w),
- from the course over time of this total signal (31h, 31n, 31 w) the spectral distribution of the amplitudes of the response vibration of the body/seat system - or so-called frequency response (32h, 32n, 32w) - is calculated and the surface integral (33h, 33n, 33w) of this frequency response (32h, 32n, 32w) is determined up to a specific final frequency (35), the final value (34h, 34n, 34w) of this surface integral (33h, 33n, 33w) at the final frequency (35) being used as a ranking for the dynamic sitting comfort of the seat bolster of the vehicle seat (1).

2. A process in accordance with claim 1,
**characterised in that**
the anthropomorphically designed, articulated test dummy (15) which can be used as an alternative consists of an upholstered upper leg/seat area (16), a similarly upholstered back area (17) which is connected to said seat area (16) at the hip joint point by means of an articulated joint and a pair of simulation lower-legs (22) which are connected to the simulation upper legs in the area of the knee joint (20) by means of an articulated joint and have foot plates (22) connected by means of articulated joints which rest on the floor, the hard parts of the upper leg and seat area (16) and those of the back area (17) faithfully imitating on the underside and at points of contact at least the shape of the pelvic bone and upper legs, including upper leg joints, of a human skeleton and the upholstering of the hard parts imitating as faithfully as possible in terms of layer thickness, softness, elasticity and attenuation behaviour and local distribution of these parameters in particular in the area of the two seat pressure points the natural soft parts in the seat and back area, the anthropomorphically designed, articulated test dummy (15) also being provided with passive ballast in the form of several ballast weights (18) inserted into the upper leg and seat area (16) and/or fixed to the inside of the back area (17) in order to achieve the necessary sitting weight.

3. A process in accordance with claim 1,
**characterised in that**
the body/seat system is excited by means of stochastic vibrations and the frequency response (32) is determined from the total signal (31) of the response vibration using a Fourier frequency transform (28).

4. A process in accordance with claim 3,
**characterised in that**
the vehicle seat (1) of which the dynamic seat comfort is to be evaluated is fitted in the appropriate vehicle (25) in accordance with the relevant provisions and the body/seat system is excited to vibration stochastically by the wheels of the vehicle (25).

5. A process in accordance with claim 4,
**characterised in that**
the stochastic vibration excitement is effected by the vehicle (25) driving over a stretch of poor quality road (26).

6. A process in accordance with claim 1,
**characterised in that**
some 70 to 100 force sensors (8') of the plurality of the force sensors (8) integrated in the measuring mat (6) are selected and only their signals are processed further, the selected force sensors (8') preferably being positioned in the area of the ischial tuberosity (10).

7. A process in accordance with claim 1,
**characterised in that**
before measurement commences, a check is carried out to ascertain whether the actual total force of all the force sensors matches a reference total force previously determined for the seat load body being used and that the sitting position of the seat load body on the vehicle seat (1) is corrected until the reference and actual values match.

8. A process in accordance with claim 1,
**characterised in that**
when using a real person as the seat loading body, vibration measurement does not commence until the measuring mat has reached body temperature.

9. A process in accordance with claim 5,
**characterised in that**
the test drive is carried out driving in a straight line on the stretch of poor quality road (26) at a constant speed of some 50 to 60 km/h with a dry road surface.

10. A process in accordance with claim 9,
**characterised in that**
the test drive is carried out over a measurement period of at least some 5 minutes.

11. A process in accordance with claim 10,
**characterised in that**
in the event that a straight stretch of poor quality road (26) approx. 5 km in length is not available, the vehicle drives along a shorter straight stretch of poor quality road (26) and back several times, the measurement signals and their processing being suspended during the turning manoeuvre.

## Revendications

1. Procédé pour la détermination d'un nombre d'évaluation (34h, 34n, 34w) représentatif de la qualité du confort d'assise dynamique de rembourrages (2, 3) d'un siège d'un véhicule (1), et en particulier pour des véhicules routiers (25),
- procédé dans lequel on pose d'abord un tapis de mesure (6) souple avec une position définie pour préparer une mesure sur le rembourrage de siège (2) du siège du véhicule (1), lequel tapis est pourvu d'une pluralité de capteurs dynamométriques (8) séparés, intégrés dans le tapis de mesure (6), répartis à la façon d'une trame et recouvrant la surface, également flexibles individuellement, qui travaillent pratiquement sans hystérésis respectivement jusqu'à une fréquence d'environ 25 Hz et qui sont pourvus respectivement de raccordements de signal aboutissant vers l'extérieur à un appareil d'analyse,
- après quoi le siège du véhicule (1) ainsi préparé est chargé avec un corps de chargement de siège dans des conditions proches de la réalité et ce corps est positionné dans une position définie, en particulier au milieu du siège du véhicule (1), une personne témoin réelle ou un corps d'essai (15) librement mobile et de conception anthropomorphe par rapport au comportement aux vibrations sur le siège du véhicule étant utilisé comme corps de chargement du siège,
- procédé pour lequel le système corps/siège comprenant le siège du véhicule (1) ainsi préparé et le corps de chargement du siège positionné dessus est excité pour obtenir des vibrations au moins dans les limites d'une plage de fréquence de 0 à 30 Hz et les signaux en instance sur les raccordements de signal des capteurs dynamométriques (8) pendant le temps d'excitation étant enregistrés et/ou réalisés, les signaux de tous les capteurs dynamométriques (8) étant additionnés au moins approximativement en coïncidence de phase pour obtenir un signal global (31h, 31n, 31w),
- à partir de la réalisation dans le temps de ce signal global (31h, 31n, 31w), on détermine la répartition spectrale des amplitudes de la vibration de réponse du système corps/siège - la courbe de réponse (32h, 32n, 32w), et l'intégrale de surface (33h, 33n, 33w) de cette courbe de réponse (32h, 32n, 32w) est calculée jusqu'à une fréquence finale (35) définie, la valeur finale (34h, 34n, 34w) de cette intégrale de surface (33h, 33n, 33w) étant utilisée avec la fréquence finale (35) comme nombre d'évaluation du confort d'assise dynamique du rembourrage du siège du véhicule (1).

2. Procédé selon la revendication 1,
**caractérisé en ce que** le corps d'essai (15) librement mobile, conçu de façon anthropomorphe et utilisable comme alternative comprend une zone surrembourrée pour les cuisses et les fesses (16), une zone dorsale (17) également surrembourrée et raccordée à la zone précédente au point d'articulation de la hanche et une paire de simulations de jambes (19) raccordées de façon articulée aux simulations de cuisses dans la zone d'articulation du genou (20) et s'appuyant sur le sol par des plaques de pied (22) raccordées de façon articulée (21), les parties dures de la zone des cuisses et des fesses (16) ainsi que celles de la zone dorsale (17) étant simulées en reproduisant de façon naturelle côté inférieur et côté appui la forme de l'os du bassin et des cuisses, y compris les articulations des cuisses d'un squelette humain, et le surrembourrage des parties dures étant simulé en représentant le plus naturellement possible les parties molles naturelles dans la zone des fesses et du dos en ce qui concerne l'épaisseur des couches, la souplesse, l'élasticité et le comportement à l'amortissement ainsi que la répartition locale de ces paramètres en particulier dans la zone des deux points de pression du siège, le corps d'essai (15) librement mobile et de conception anthropomorphe étant pourvu également, pour obtenir le poids d'assise nécessaire, d'un ballast passif sous la forme de plusieurs poids de ballast (18) introduits côté intérieur dans la zone des cuisses et des fesses (16) et/ou maintenu sur le côté intérieur de la zone dorsale (17).

3. Procédé selon la revendication 1,
**caractérisé en ce que** le système corps/siège est excité au moyen de vibrations stochastiques et la courbe de réponse (32) est déterminée à partir du signal global (31) de la vibration de réponse par une transformation de fréquence de Fourier (28).

4. Procédé selon la revendication 3,
**caractérisé en ce que** le siège du véhicule (1) à évaluer par rapport à son confort d'assise dynamique est intégré conformément aux dispositions dans le véhicule (25) qui en fait partie et le système corps/siège est excité à partir des roues du véhicule (25) de façon stochastique pour obtenir des vibrations.

5. Procédé selon la revendication 4,
**caractérisé en ce que** l'excitation de vibration stochastique s'effectue par le déplacement du véhicule (25) sur un tronçon de mauvais chemin (26).

6. Procédé selon la revendication 1,
**caractérisé en ce qu'**on choisit environ 70 à 100 capteurs dynamométriques (8') parmi la pluralité des capteurs dynamométriques (8) intégrés dans le tapis de mesure (6) et on traite ultérieurement seulement leurs signaux, les capteurs dynamométriques (8') choisis étant disposés de préférence dans la zone du tabouret (10).

7. Procédé selon la revendication 1,
**caractérisé en ce qu'**on contrôle avant le début de la mesure si la force globale réelle de tous les capteurs dynamométriques coïncident avec une force globale prévue calculée auparavant pour le corps de chargement du siège utilisé et la position assise du corps de chargement du siège sur le siège du véhicule (1) est corrigée jusqu'à ce qu'une concordance prévue/réelle soit obtenue.

8. Procédé selon la revendication 1,
**caractérisé en ce que**, si l'on utilise une personne réelle comme corps de chargement du siège, la mesure de vibration est commencée seulement lorsque le tapis de mesure a pris la chaleur du corps.

9. Procédé selon la revendication 5,
**caractérisé en ce que** le parcours de mesure est effectué sur le tronçon de mauvais chemin (26) en ligne droite à une vitesse constante d'environ 50 à 60 km/h sur une chaussée sèche.

10. Procédé selon la revendication 9,
**caractérisé en ce que** le parcours de mesure est effectué pendant un temps de mesure d'au moins environ 5 minutes.

11. Procédé selon la revendication 10,
**caractérisé en ce que**, dans le cas où un tronçon de mauvais chemin (26) rectiligne d'une longueur d'environ cinq km n'est pas disponible, on parcourt une partie plus courte d'un tronçon de mauvais chemin (26) rectiligne en faisant plusieurs fois l'aller et retour, les signaux de mesure et leur traitement étant supprimés pendant la manoeuvre de demi-tour.
